(19) Europäisches Patentamt
European Patent Office
Office européen des brevets

(11) **EP 1 165 369 B1**

(12) **FASCICULE DE BREVET EUROPEEN**

(45) Date de publication et mention
de la délivrance du brevet:
**01.02.2006 Bulletin 2006/05**

(21) Numéro de dépôt: **00978983.5**

(22) Date de dépôt: **10.11.2000**

(51) Int Cl.:
***B64C 27/52*** *(2006.01)*   ***B64C 27/10*** *(2006.01)*
***B64C 27/48*** *(2006.01)*

(86) Numéro de dépôt international:
**PCT/FR2000/003135**

(87) Numéro de publication internationale:
**WO 2001/034466 (17.05.2001 Gazette 2001/20)**

(54) **HELICOPTERE A PILOTAGE PENDULAIRE A HAUTE STABILITE ET A GRANDE MANOEUVRABILITE**

PENDELGESTEUERTER HUBSCHRAUBER MIT HOHER STABILITÄT UND GROSSER MANÖVRIERBARKEIT

HELICOPTER WITH HIGHLY STABLE AND HIGHLY MANOEUVRABLE PENDULAR PILOTING SYSTEM

(84) Etats contractants désignés:
**AT BE CH CY DE DK ES FI FR GB GR IE IT LI LU MC NL PT SE TR**

(30) Priorité: **12.11.1999 FR 9914229**

(43) Date de publication de la demande:
**02.01.2002 Bulletin 2002/01**

(73) Titulaire: **DE SALABERRY, Bernard Lucien Charles**
**F-78000 Versailles (FR)**

(72) Inventeur: **DE SALABERRY, Bernard Lucien Charles**
**F-78000 Versailles (FR)**

(74) Mandataire: **de Saint-Palais, Arnaud Marie**
**Cabinet Moutard,**
**35, rue de la Paroisse**
**78000 Versailles (FR)**

(56) Documents cités:
**US-A- 2 628 683      US-A- 5 791 592**

**Description**

La présente invention concerne la réalisation d'un hélicoptère à pilotage pendulaire caractérisé par une très grande manoeuvrabilité et par une stabilité intrinsèque. Dans un tel hélicoptère, la tête de rotor est fixée au fuselage au moyen d'une rotule qui lui permet d'être orientée en roulis et tangage, par rapport audit fuselage, par une commande de pilotage, à l'aide de vérins par exemple. Pour éviter des réactions gyroscopiques du rotor sur le fuselage, la tête de rotor d'un hélicoptère à pilotage pendulaire comprend normalement deux rotors tournant en sens inverse.

Les hélicoptères classiques dont les mouvements du plan du rotor, commandés par des variations cycliques du pas des pales, ne dépassent pas 5 à 6 degrés par rapport au fuselage, ne peuvent pas décoller ou atterrir sur des surfaces inclinées de plus de quelques degrés et encore moins sur des surfaces mobiles en roulis ou tangage, ce qui limite fortement leur possibilités d'emploi ailleurs que sur des terrains préparés et notamment sur des bateaux.

Le brevet américain n° 5 791 592 décrit un hélicoptère à pilotage pendulaire qui apporte une grande simplicité de construction car il supprime toute la mécanique complexe de variation du pas des pales d'un hélicoptère classique. Il conserve par contre les mêmes limitations de manoeuvre et de stabilité qu'un hélicoptère classique.

Le brevet US 5 601 257 propose une commande de lacet pour hélicoptère comprenant deux rotors contrarotatifs montés sur des axes dont l'orientation peut être modifiée dans la limite d'un angle d'environ 15 degrés par rapport à la verticale.

Vis-à-vis des deux solutions précédemment évoquées l'invention a pour but la réalisation d'un hélicoptère à pilotage pendulaire qui non seulement présente une stabilité de pilotage intrinsèque, mais surtout qui offre des possibilités de manoeuvre lui permettant d'effectuer des décollages et des atterrissages sur des terrains fortement inclinés ou encore sur des plates-formes fortement mobiles en roulis et tangage telles que des ponts de bateaux.

A cet effet, elle propose un hélicoptère à pilotage pendulaire du type comportant :

- un fuselage muni d'une motorisation et de moyens de transmission d'énergie,
- une tête de rotor, comportant deux rotors contrarotatifs tournant autour d'un même axe, fixée au fuselage par une liaison mobile, conçue de manière à transmettre à la tête de rotor de l'énergie issue des moyens de transmission d'énergie tout en assurant une liberté de mouvement angulaire de la tête de rotor,
- aux moins deux vérins de commande de l'orientation de ladite tête de rotor par rapport au fuselage,
- des moyens de commande desdits vérins.

Selon l'invention, la liaison mobile grâce à laquelle la tête de rotor est fixée au fuselage est conçue de manière à permettre des variations angulaires de la tête par rapport au fuselage supérieures à 20° et pouvant atteindre ± 20°, de façon à pouvoir placer le plan des rotors à l'horizontale même si le fuselage est fortement incliné et en ce que les moyens de commande desdits vérins comprennent des moyens permettant d'orienter en tangage et en roulis la position de l'axe des rotors par rapport à la verticale indépendamment de l'attitude du fuselage, ces moyens d'orientation comprenant :

- un générateur d'angles à commander à la tête de rotor fournissant deux angles de tangage et roulis, respectivement $\beta$ et $\rho$,
- une référence de verticale fournissant au moins deux angles représentant l'attitude du fuselage par rapport à la verticale, respectivement $\alpha$ et $\phi$,
- un élaborateur d'ordre qui calcule les ordres à envoyer aux vérins pour que ceux-ci orientent la tête de rotor de façon que son axe fasse avec le fuselage des angles $\gamma$ et $\sigma$ respectivement en tangage et roulis, $\gamma$ et $\sigma$ étant tels que

$$\gamma = \beta + \alpha \quad et \quad \sigma = \rho + \phi$$

de façon à ce que l'axe de la tête de rotor fasse bien avec la verticale les angles $\beta$ et $\rho$ respectivement en tangage et roulis.

L'invention qui permet de décoller et d'atterrir dans des conditions jusqu'alors interdites s'applique aussi bien à des aéronefs non pilotés qu'à des aéronefs pilotés, à moteurs thermiques ou électriques.

Des modes de réalisation de l'invention seront décrits ci-après, à titre d'exemples non limitatifs, avec référence aux dessins annexés dans lesquels :

La figure 1 est une vue en perspective écorchée d'un hélicoptère à pilotage pendulaire selon l'invention dans un mode de réalisation sans pilote,

La figure 2 est une vue en coupe arrière de l'hélicoptère de la figure 1,

La figure 3 est une vue en coupe détaillée de la tête de rotor de l'hélicoptère de la figure 1,

La figure 4 est une vue en coupe détaillée des moyens de transmissions de l'hélicoptère de la figure 1,

Les figures 5a et 5b sont des vues en coupe, d'un pied de pale de l'hélicoptère de la figure 1, la figure 5a étant une vue de l'ensemble du pied de pale et la figure 5b étant une vue du support de pale lui-même,

La figure 6 est une vue de côté de l'hélicoptère de la figure 1 montrant le montage des dérives,

La figure 7 est une vue schématique de l'hélicoptère selon l'invention montrant le montage de la dérive dans le cas d'une dérive unique prolongeant le fuselage,

La figure 8 est un bloc diagramme des moyens de pilotage de l'hélicoptère selon l'invention,

Les figures 9a et 9b sont des vues schématiques de l'hélicoptère selon l'invention montrant son principe de pilotage,

La figure 10 est une vue schématique de l'hélicoptère selon l'invention illustrant sa maniabilité et

La figure 11 est une vue schématique d'une variante à pilotage manuel de l'hélicoptère montrant son principe de pilotage.

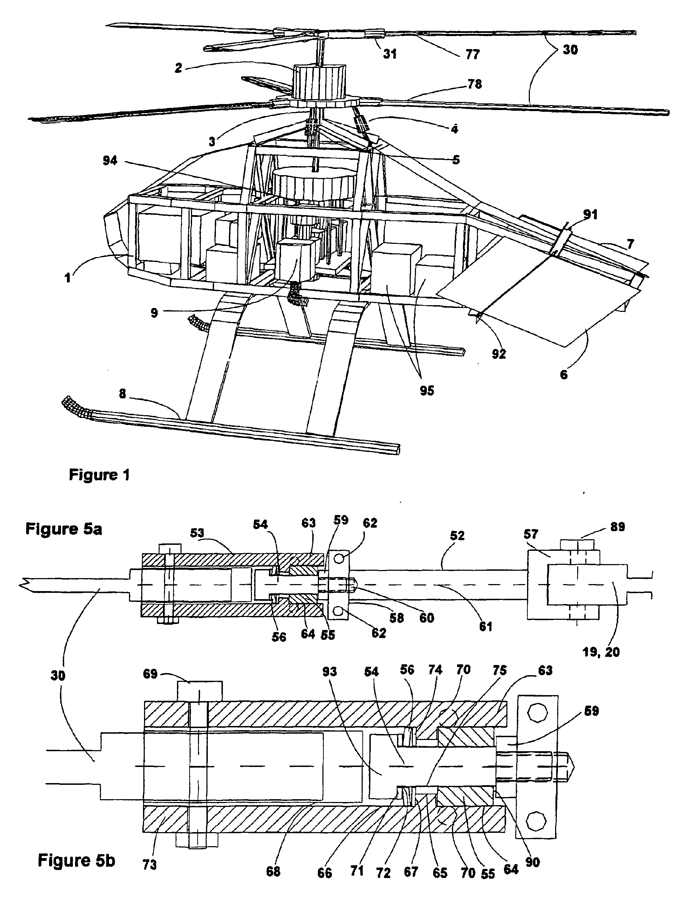

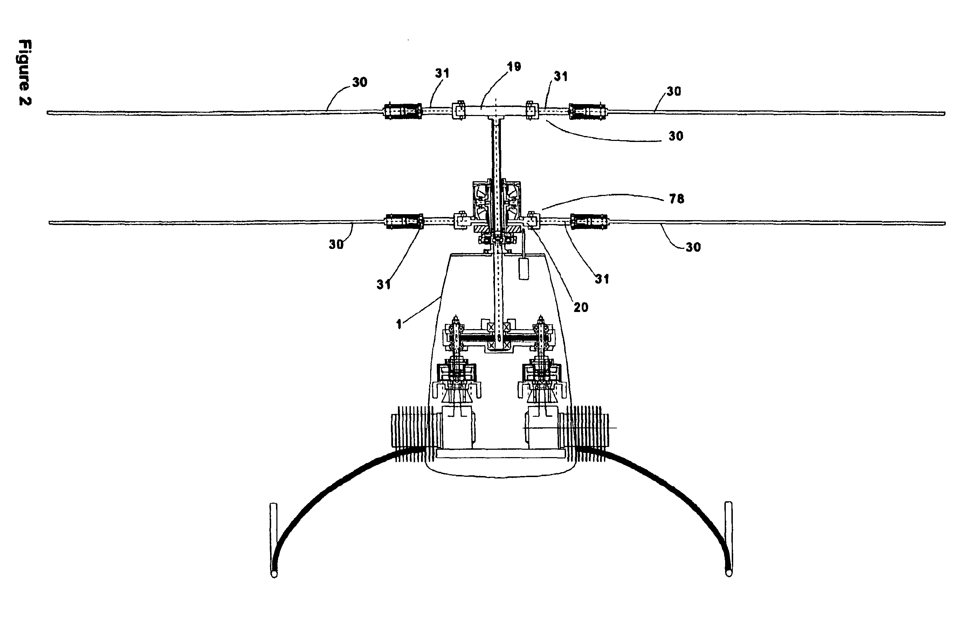

Les figures 1 et 2 montrent un exemple de réalisation non pilotée de l'hélicoptère à pilotage pendulaire selon l'invention. Il comporte :

- un fuselage 1 réalisé en cornières d'aluminium ou en tout autre matériau et qui peut prendre n'importe quelle forme appropriée,
- une tête de rotor 2, reliée au fuselage 1 par une rotule 3,
- des vérins, respectivement 4 et 5, reliant le fuselage 1 à la tête de rotor 2, de façon à commander l'orientation de ladite tête de rotor, en tangage et en roulis, par rapport audit fuselage 1,
- au moins une et de préférence deux dérives orientables 6 et 7.

Le fuselage, monté sur un train d'atterrissage 8, de préférence à patins, comprend :

- un ensemble de motorisation 9,
- des moyens de transmission 94, vers la tête de rotor 2, de l'énergie issue de l'ensemble de motorisation 9,
- des moyens de commande des vérins 95.

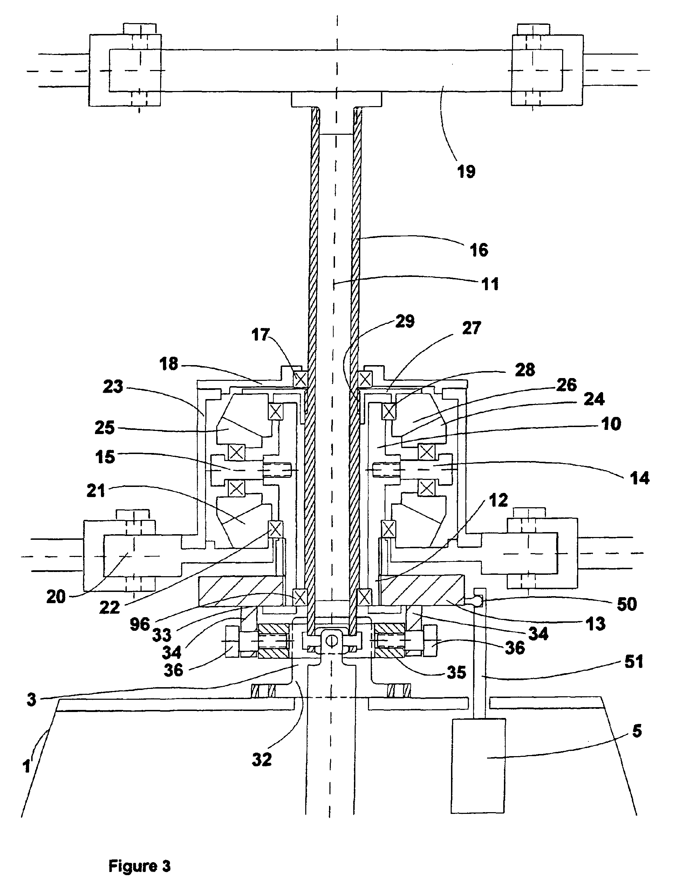

La tête de rotor 2, ainsi que le montre la figure 3, comprend :

- un support central 10, sensiblement de révolution, ayant un axe vertical 11, monté, par sa partie inférieure 12, sur une plaque support 13 sensiblement perpendiculaire audit axe 11, et portant au moins deux petits axes, respectivement 14 et 15, perpendiculaires audit axe 11, lesdits petits axes étant préférentiellement réalisés à l'aide de vis épaulées,
- un axe 16, de préférence creux, colinéaire de l'axe 11, traversant le support central 10 et la plaque 13, tournant entre deux roulements à billes, l'un 96 fixé dans ledit support central 10 et l'autre 17 fixé dans un couvercle 18, ledit axe 16 portant un plateau supérieur 19,
- un plateau inférieur 20 centré sur l'axe 11, recevant un pignon conique 21 et formant avec celui-ci un logement pour un roulement 22 centré sur le support central 10,
- un boîtier 23, fixé sur le plateau inférieur 20 et fermé par le couvercle 18,
- deux pignons coniques, respectivement 24 et 25, formant satellites et tournant autour des petits axes 14 et 15,
- un autre pignon conique 26, également colinéaire à l'axe 11, rendu solidaire de l'axe 16 par une pièce de révolution 27, formant avec ledit pignon 26 un logement pour un roulement 28 centré sur le support central 10, la pièce de révolution 27 et l'axe 16 étant eux-mêmes rendus solidaires en rotation par des canelures axiales 29,
- au moins quatre pales 30 et de préférence six, figures 1 et 2, deux ou trois pales étant fixées par des pieds de pales 31 sur le plateau supérieur 19 pour former un rotor supérieur 77, les deux ou trois autres étant fixées, également par des pieds de pales 31, sur le plateau inférieur 20 pour former un rotor inférieur 78.

La rotule 3, constituée comme un cardan, comprend :

- une chape fixe 32, solidaire du fuselage 1, et dont le centre est évidé,
- une chape mobile 33, constituée par deux excroissances 34 fixées sous la plaque 13 solidaire du support 10 de la tête de rotor 2,
- une noix 35, de forme annulaire, reliant la chape fixe 32 et la chape mobile 33 à l'aide de quatre vis épaulées 36 articulées dans lesdites chapes 32 et 33 et vissées dans ladite noix.

La longueur des chapes 32 et 33, leurs évidements et le diamètre intérieur de la noix annulaire 35, sont dimensionnés pour laisser passer les moyens de transmission d'énergie décrits ci-après tout en assurant une liberté de mouvement angulaire de la tête de rotor 2 par rapport au fuselage 1 d'au moins ± 10 degrés et pouvant atteindre de préférence ± 20 degrés, de telle sorte que l'axe 11 de ladite tête de rotor 2 puisse être orienté dans un cône dont l'angle au sommet est au moins compris entre 10 et 20 degrés et de préférence supérieur à 20 degrés.

Ladite rotule 3 peut bien entendu être remplacée par tout autre type de liaison mobile entre le fuselage 1 et la tête de rotor 2 pourvu qu'elle permette un débattement de l'axe 11 de ladite tête de rotor dans un cône d'angle au sommet au moins compris entre 10 et 20 degrés et de préférence supérieur à 20 degrés.

La plaque 13, de préférence circulaire, porte sur sa périphérie au moins deux plots 50, placés de préférence à 90 degrés l'un de l'autre par rapport à l'axe 11, et dont les formes sont adaptées pour coopérer chacun avec une tige de commande 51 en formant avec ladite tige une rotule. Cette tige peut être directement la tige de sortie d'un des vérins 4 ou 5 ou de préférence être reliée à ces vérins par un jeu de biellettes déterminé pour limiter ou supprimer toute interaction entre les deux actions en roulis et tangage. Plus généralement les vérins peuvent être électriques, hydrauliques ou pneumatiques, à sortie linéaire ou rotative, être reliés à la tête de rotor 2 par tout type de transmission approprié et être fixés au fuselage par tout type de montage.

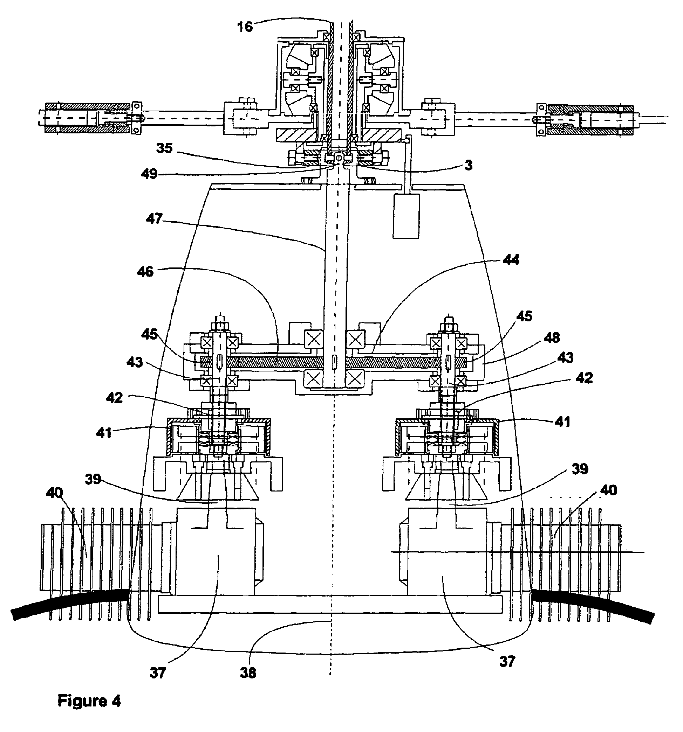

La motorisation, figure 4, est avantageusement réalisée avec deux moteurs à piston à refroidissement par air, placés symétriquement par rapport au plan de symétrie 38 du fuselage 1 et ayant chacun un axe de sortie 39 sensiblement vertical. Les moteurs peuvent comporter chacun un ou plusieurs cylindres 40, les cylindres d'un même moteur étant de préférence montés en parallèle de façon à pouvoir être placés à l'extérieur et de chaque coté du fuselage 1. Il n'est alors pas nécessaire de prévoir un refroidissement forcé desdits cylindres 40, le refroidissement naturel par l'air déplacé par les rotors 77 et 78 ou par la vitesse étant suffisant.

Les moyens de transmission d'énergie 94, ainsi que le montre également la figure 4, comportent,

- comme pour tout hélicoptère, au moins un embrayage 41 et au moins une roue libre 42 ayant un axe de sortie 43,
- un réducteur de vitesse 44,
- un cardan 49.

Le réducteur de vitesse 44 est constitué de deux petits pignons 45, montés chacun sur un axe de sortie 43 des roues libres 42, et d'un grand pignon 46 solidaire d'un arbre de transmission 47 orienté vers le haut. L'ensemble est monté dans un carter 48 muni d'un dispositif de lubrification adapté. Du fait de l'écartement relativement important des moteurs apporté par la disposition extérieure des cylindres, la réduction peut être suffisante avec un seul train de pignon sans trop réduire la taille des petits pignons. Le rapport de réduction peut ainsi être compris entre 5 et 10 sans difficulté particulière.

Le cardan 49 est placé au centre de la noix 35. Une de ses extrémités est solidaire de l'axe 16 de la tête de rotor. l'autre extrémité est solidaire de l'arbre de transmission 47 sortant du réducteur de vitesse 44. Le débattement possible de ce cardan est au moins égal au débattement possible de la rotule et est donc dimensionné pour atteindre lui-aussi ± 20 degrés.

Ainsi décrit, l'ensemble des moyens de transmission 94 et de la tête de rotor 2 fonctionne comme suit :

Les moteurs 37 entraînent les embrayages 41 par l'intermédiaire des axes de sortie 39. Ces embrayages entraînent les petits pignons 45 et donc le grand pignon 46 par l'intermédiaire des roues libres 42 et des axes 43. Le grand pignon 46 entraîne l'axe 16, par l'intermédiaire de l'arbre de transmission 47 et du cardan 49, au travers de la rotule 3. L'axe 16 entraîne directement le plateau 19 qui porte les pieds de pales 31 et les pales 30 du rotor supérieur 77. Il entraîne, par l'intermédiaire des canelures 29 et de la pièce 27, le pignon conique 26. Celui-ci entraîne les deux pignons satellites 24 et 25 autour de leurs axes fixes 14 et 15. Ceux-ci entraînent à leur tour, dans un sens de rotation inverse à celui du pignon conique 26, le pignon conique 21 et le plateau inférieur 20 qui porte les pieds de pales 31 et les pales 30 du rotor inférieur 78.

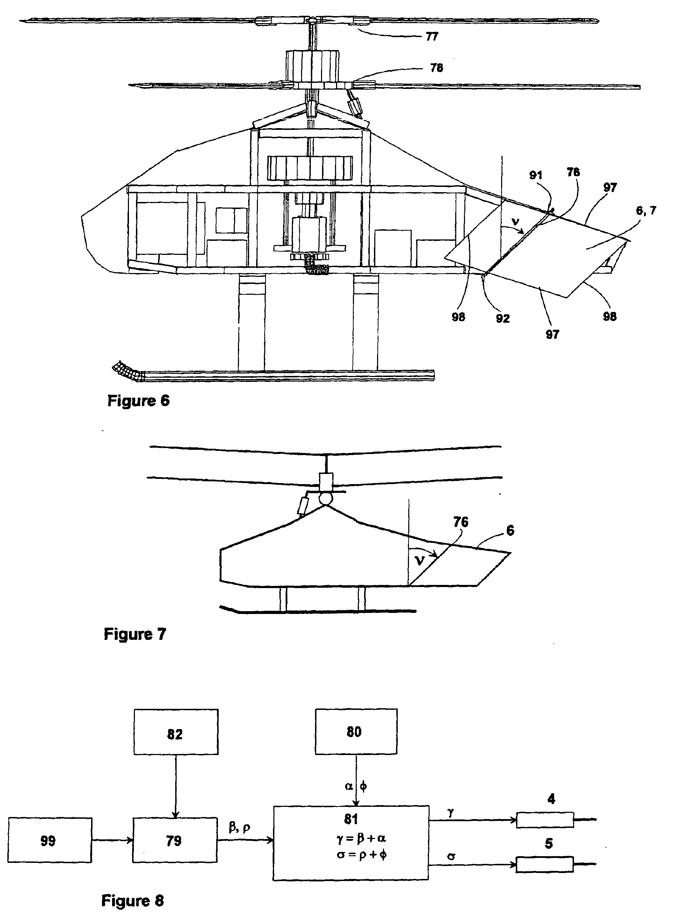

Les pieds de pales 31 constituent l'articulation de battement et de traînée nécessaire pour les pales de tout hélicoptère. Les pieds de pales réalisés pour l'hélicoptère selon l'invention permettent également le calage du pas des pales. Ainsi que le montrent les figures 5a et 5b, ils comportent :

- une pièce allongée formant embase 52,
- un support de pale 53,
- une pièce 54 en forme de vis épaulée ayant une tête 93 et un épaulement 75 formant un axe,
- un matériau amortisseur 55, de forme préférentiellement cylindrique, percé d'un trou axial dont le diamètre est sensiblement égal à celui de l'épaulement 75 de la vis épaulée 54,
- un jeu de rondelles d'appui dont une au moins 56 est conique, de préférence élastique, et dont le diamètre intérieur est sensiblement égal au diamètre de l'épaulement 75 de la vis 54.

L'embase 52 comporte :

- à l'une de ses extrémités, une chape 57 destinée à la fixation du pied de pale, par une vis 89, sur l'un des plateaux supérieur ou inférieur 19 ou 20,
- à l'autre extrémité, un renfort 58 prolongé par un épaulement 59 percé en son centre d'un trou taraudé profond 60 ayant un axe 61 sensiblement perpendiculaire à l'axe 11 de la tête de rotor 2.

Le renfort 58 est lui même percé de deux trous taraudés 62 destinés à la fixation d'un moyen de calage du pas de la pale, moyen non représenté et qui peut être quelconque.

Le support de pale 53, de section sensiblement cylindrique ou rectangulaire, comporte successivement, figure 5b, à partir de l'une de ses extrémités 63 :

- un premier évidement 64 dont les dimensions sont sensiblement identiques à celles du matériau amortisseur 55,
- un second évidement 65 relativement court et dont le diamètre est très légèrement supérieur au diamètre de l'épaulement 75 de la vis 54,
- un troisième évidement 66 dont le diamètre est supérieur à celui de la tête de la vis 54 et égal au diamètre extérieur de la rondelle conique 56, le deuxième évidement 65 et ce troisième évidement 66 étant reliés par une surface anulaire plane formant lamage 67,
- une fente épaisse 68, formant chape, destinée à la fixation de la pale 30 elle-même à l'aide d'une vis 69, ladite fente se trouvant à l'autre extrémité 73 dudit support de pale 53.

Le support de pale comporte également deux trous taraudés 70 destinés à la fixation du moyen de calage du pas de la pale évoqué ci-dessus.

Pour le montage, la vis épaulée 54 reçoit tout d'abord une rondelle 71 dont le diamètre intérieur est sensiblement égal au diamètre de son épaulement 75 et dont le diamètre extérieur est sensiblement identique à celui de la tête 93 de ladite vis 54. Elle reçoit ensuite la rondelle conique 56, la partie haute du cône de ladite rondelle venant en appui sur la rondelle 71. Le point de contact entre ladite rondelle conique 56 et ladite rondelle 71 forme une zone d'articulation 72. La vis épaulée reçoit ensuite une rondelle 74 dont le diamètre intérieur est sensiblement égal au diamètre de l'évidement 65 et dont le diamètre extérieur est sensiblement égal à celui de l'évidement 66. Ladite vis 54 est ensuite introduite dans le support de pale 53 par l'extrémité 73 et vient traverser l'évidement 65, la rondelle 74 venant prendre appui sur le lamage 67. Le matériau amortisseur 55 est enfilé sur l'épaulement 75 de la vis 54, à l'intérieur de l'évidement 64 du support de pale, et ladite vis 54 est vissée dans le trou taraudé 60 de l'embase de pied de pale 52 de façon à en être rendue parfaitement solidaire. La longueur du matériau amortisseur est déterminée pour remplir presque complètement l'évidement 64 et la longueur de l'épaulement 75 de la vis 54 est déterminé pour que, une fois ladite vis vissée dans le trou taraudé 60, il reste un léger jeu 90 entre l'épaulement 59 et le matériau amortisseur 55.

La zone d'articulation de battement et de traînée 72 se trouve donc située sur un anneau de contact entre la rondelle conique 56 et la rondelle 71 en contact de la tête 93 de la vis épaulée 54. Lors des mouvements de battement ou de traînée de la pale qui sont des rotations perpendiculaires à l'axe 61, les mouvements de battement correspondant à des mouvement verticaux de la pale et les mouvements de trainée correspondant à des mouvements horizontaux de celle-ci, le support de pale tourne autour de la zone d'articulation 72 en comprimant le matériau amortisseur 55 sur l'épaulement 75 de la vis 54. Ce matériau 55 assure ainsi une double fonction d'élasticité et d'amortissement. L'élasticité de la rondelle conique 56 permet à celle-ci de se déformer lors des mouvements de battements et de maintenir une bonne répartition, sur la surface de la tête de vis 54, des forces de traction centrifuge exercées par la pale en rotation.

Lorsque l'évidement 64 et le matériau amortisseur 55 sont de forme cylindrique, les raideurs et les coefficients d'amortissement de l'articulation sont sensiblement identiques pour les deux mouvements de battement et de traînée. Si ces paramètres doivent être différents, ils peuvent être ajustés en donnant à l'évidement une forme différente, elliptique par exemple.

Le calage de l'incidence de la pale se fait par rotation du support de pale 53, autour de l'épaulement 75 de la vis 54, par rapport à l'embase 52, ce calage étant maintenu par un moyen classique fixé à l'aide des trous taraudés 62 et 70 et non représenté.

Ainsi que le montre la figure 6, la ou les dérives orientables 6 et 7 sont articulées autour d'un ou de deux axes 76 fortement inclinés vers l'arrière, d'un angle ν de préférence compris entre 35 et 55 degrés et avantageusement sensiblement égal à 45 degrés. Ainsi montées et commandées par exemple par des vérins non représentés, les dérives 6 et 7 permettent d'agir sur l'orientation en lacet de l'hélicoptère aussi bien en vol stationnaire qu'en vol de translation. En vol stationnaire, le souffle vertical des rotors 77 et 78 agit seul sur les dérives 6 et 7 en créant une force dont la composante horizontale, perpendiculaire au plan de symétrie 38, est égale, pour chaque dérive, à $K.S.V^2.\sin\nu.\sin\delta$ où :

- K est un coefficient dépendant des paramètres aérodynamiques de l'hélicoptère, du profil de la dérive, de l'altitude et de la température,
- S est la surface de la dérive,
- V est la vitesse de l'air envoyé par les rotors,
- $\nu$ est l'angle d'inclinaison de l'axe de la dérive par rapport à la verticale,
- $\delta$ est l'angle commandé à la dérive autour de son axe par rapport à un plan vertical.

Cette composante latérale de la force crée un couple de rotation qui vient faire tourner en lacet l'hélicoptère et permet de le diriger.

En vol de translation, la vitesse de translation vient se combiner à la vitesse verticale de l'air pour donner un flux qui fait avec la verticale un angle $\tau$ qui dépend de la vitesse de translation et de la vitesse verticale de l'air nécessaire à la sustentation de l'hélicoptère. La composante horizontale et perpendiculaire au plan de symétrie de la force s'écrit alors : $K.S.V^2.\sin(\nu+\tau).\sin\delta$

Dans le cas de deux dérives 6 et 7, figures 1 et 6, les deux axes 76 sont fixés par chacune de leurs extrémités à deux supports 91 et 92 solidaires de la partie arrière du fuselage. Il est alors intéressant de donner à chacune des dérives 6 et 7 une forme parallélépipédique ayant deux grands côtés 97 sensiblement parallèles à la partie tombante arrière du fuselage et deux petits côtés 98 sensiblement parallèles aux axes d'articulation 76. Il est également intéressant que ces axes d'articulation 76 soient situés aux environs du premier tiers avant des dérives 6 et 7.

Dans le cas d'une seule dérive 6, celle-ci est de préférence placée dans l'axe du fuselage 1, à l'arrière ainsi que le montre la figure 7. Le fuselage est raccourci de façon à aménager un emplacement incliné de fixation de l'axe de rotation 76 de ladite dérive 6. Ledit axe 76 faisant également, avec la verticale, un angle $\nu$ préférentiellement égal à 45 degrés.

Ainsi que le montre la figure 8, Les moyens de commande 95 d'orientation du rotor, qui peuvent être inclus dans un seul et même boîtier de calcul, comportent notamment :

- un générateur d'angles 79 à commander à la tête de rotor 2,
- une référence de verticale 80,
- un élaborateur d'ordre 81,
- au moins deux vérins 4 et 5.

Le générateur d'angles 79 fournit deux angles d'orientation de la tête de rotor 2, respectivement $\beta$ en tangage et $\rho$ en roulis par exemple. Ces deux angles représentent l'attitude que doit prendre la tête de rotor 2 par rapport à la verticale. Dans une version de base, ce générateur d'angles peut n'être constitué que d'un moyen d'adaptation des ordres envoyés par une télécommande extérieure et reçus par un récepteur de télécommande 99. Dans ce cas, les angles à commander $\beta$ et $\rho$ sont ceux envoyés par la télécommande. Dans une version plus automatisée, munie de moyens de navigation et de guidage 82, le générateur d'angle 79 élabore les angles à commander $\beta$ et $\rho$ à partir des informations reçues desdits moyens de navigation et de guidage, en fonction de lois de commandes prédéterminées, et en tenant compte d'éventuelles corrections ou modifications reçues par le récepteur de télécommande 99.

A noter que ces lois de commandes prédéterminées peuvent être très complexes et comporter des termes élaborés à partir des composantes d'accélération angulaire du fuselage, des composantes de vitesse angulaire dudit fuselage et du carré de ces composantes.

La référence de verticale 80 peut-être très simple ou plus complexe en fonction des performances recherchées. Elle comportera par exemple deux accéléromètres ou inclinomètres et trois gyromètres associés à un calculateur capable de calculer, à partir des informations d'accélération et de vitesse angulaire, les orientations $\alpha$ et $\phi$ en tangage et roulis du fuselage représentant l'attitude dudit fuselage par rapport à la verticale.

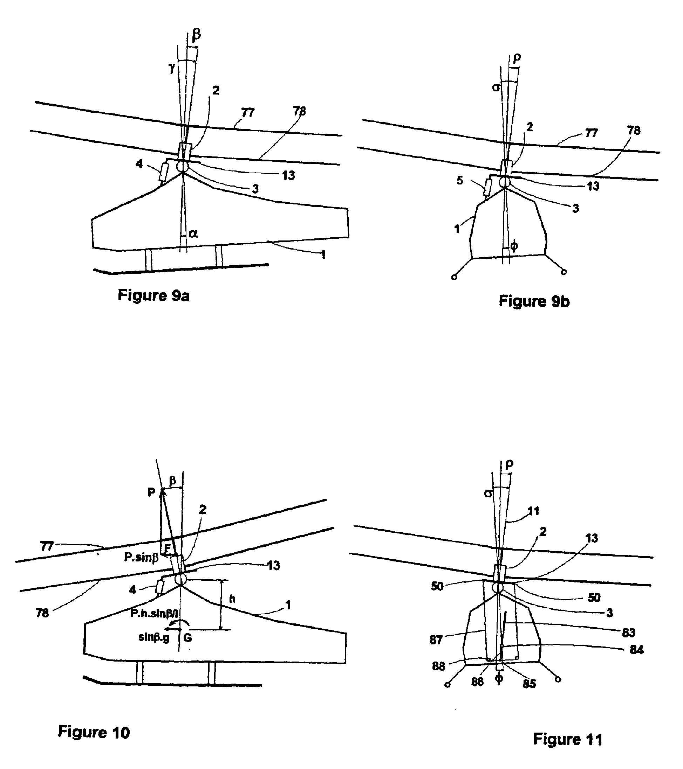

L'élaborateur d'ordre 81 élabore des ordres d'orientation de la tête de rotor 2, par rapport au fuselage 1, tels que l'attitude de ladite tête de rotor soit égale à l'attitude commandée par le générateur d'angle 79 augmentée de l'attitude du fuselage 1 par rapport à la verticale et ceci de façon que l'attitude de la tête de rotor 2 par rapport à la verticale soit bien l'attitude qui lui est commandée par l'ensemble des moyens de télécommande, de navigation, de guidage et de pilotage. A cet fin l'élaborateur d'ordre 81 envoie aux vérins 4 et 5 des ordres calculés pour que, en fonction de leurs caractéristiques de réponse, ceux-ci orientent la tête de rotor 2 en lui faisant faire des angles respectivement $\gamma$ et $\sigma$ par rapport au fuselage 1. Les angles $\gamma$ et $\sigma$ sont eux mêmes calculés respectivement par $\gamma = \beta + \alpha$ et $\sigma = \rho + \phi$. Ainsi que le montrent les figures 9a et 9b respectivement pour le tangage et le roulis. De cette façon, les ordres envoyés aux vérins 4 et 5 tiennent compte de l'orientation instantanée du fuselage 1 pour commander l'orientation de la tête de rotor 2 et l'orientent pour qu'elle fasse bien les angles $\beta$ et $\rho$ par rapport à la verticale, indépendamment de la position angulaire dudit fuselage 1. La position des rotors 77 et 78 est ainsi découplée de la position du fuselage 1 et celui-ci est alors suspendu comme un pendule sous la tête de rotor 2. Si les angles commandés $\beta$ et $\rho$ sont nuls, le plan des rotors 77 et 78 reste horizontal et parfaitement stable. Les oscillations éventuelles du fuselage formant pendule sont amorties par les frottements du flux d'air autour du fuselage et l'hélicoptère devient intrinsèquement stable du fait du procédé de commande de l'orientation des rotors.

Si un angle β est commandé en tangage par le vérin 4, vers l'avant par exemple, le plan des rotors 77 et 78 s'incline très rapidement de cet angle β et fait apparaître instantanément une force horizontale P.sinβ, P étant la portance des rotors 77 et 78, égale et opposée au poids de l'hélicoptère, figure 10. Cette force est transmise au fuselage 1, au niveau de la rotule 3 située à une hauteur h au dessus du centre de gravité G dudit fuselage 1. Celui-ci subit alors d'une part une accélération sinβ.g et d'autre part un couple de tangage égal à [P.h.sin(β - α)], couple qui va incliner le fuselage vers l'avant avec une accélération angulaire égale à [P.h.sin(β - α)]/I, I étant le moment d'inertie de l'hélicoptère autour de son centre de gravité. On conçoit donc que la mise en vitesse par l'accélération sinβ.g, et donc la maniabilité d'un tel hélicoptère, soit beaucoup plus grande que celle d'un hélicoptère classique dès lors que l'angle β maximum peut atteindre 20 degrés au lieu de 6 degrés. La même accélération sinβ.g n'est atteinte sur un hélicoptère classique, dont le débattement du rotor par rapport à son axe est limité à 6 degrés, qu'après que son fuselage se soit lui-même incliné de 14 degrés, sous l'effet du couple de basculement, de façon à ce que son rotor puisse être lui-même incliné du même angle β égal à 20 degrés, ce qui est beaucoup plus long que le temps nécessaire au basculement de la tête de rotor 2 de l'hélicoptère selon l'invention.

Les déplacements latéraux et les rotations en roulis obéissent aux mêmes lois que les déplacements et rotations en tangage décrits ci-dessus, sans qu'ils soit nécessaire de les décrire plus en détails.

Il faut noter que, pour des questions de commodités, les différents angles ainsi que les vérins, attribués au tangage et au roulis, peuvent également correspondre à des combinaisons du tangage et du roulis et donc être positionnés différemment autour de l'axe 11 de la tête de rotor 2 sans sortir du cadre de l'invention. De la même façon, et pour assurer une redondance des commandes, le nombre et l'emplacement des vérins peut être quelconque sans sortir du cadre de l'invention.

La figure 11 montre, pour le pilotage en roulis, une méthode de pilotage de l'orientation des rotors 77 et 78, par rapport à la verticale, qui s'applique pour faciliter le pilotage d'un hélicoptère à pilotage pendulaire piloté manuellement à l'aide d'un manche de commande 83 par exemple. Le principe consiste à relier le manche de commande 83 à la tête de rotor 2 par des moyens de transmission qui maintiennent l'axe 11 de la tête de rotor 2 parallèle au manche de commande 83. A cet effet, le manche de commande 83, articulé autour d'un point de pivotement 84, est relié, en un point de fixation 85 situé à sa partie inférieure 86, à l'aide de câbles 87 passant autour de poulies 88, à deux plots 50 placés sur la plaque 13 et servant à commander l'orientation de la tête de rotor 2. La distance séparant le point de pivotement 84 et le point de fixation 85 est égale à celle séparant chacun des plots 50 de l'axe 11 de la tête de rotor 2. Il est alors évident que, pour des raisons géométriques simples, les rotors 77 et 78 tournent en même temps que le manche 83 et d'un même angle, l'axe 11 des rotors restant toujours parallèle audit manche 83. La tâche du pilote est alors simplifiée car il lui est facile de manoeuvrer son manche pour le maintenir fixe dans l'espace, dans la direction souhaitée pour faire évoluer l'hélicoptère, et ceci quels que soient les mouvements du fuselage dans lequel il est assis. Le même principe est évidemment appliqué au tangage sans qu'il soit besoin de le décrire plus avant. Les câbles 87 peuvent bien entendu être remplacés par tout autre moyens tels que des transmissions rigides, des transmissions hydrauliques ou encore électriques. Sur un tel hélicoptère, le pilotage manuel peut bien entendu être assisté d'un pilotage automatique, basé sur les mêmes principes de commande d'orientation de la tête de rotor 2 que ceux décrits précédemment pour l'hélicoptère non piloté, et en utilisant les moyens classiques de passage du pilotage automatique au pilotage manuel et réciproquement.

**Revendications**

1. Hélicoptère à pilotage pendulaire du type comportant :

   - un fuselage (1) muni d'une motorisation (9) et de moyens de transmission d'énergie,
   - une tête de rotor (2), comportant deux rotors contrarotatifs (77, 78) tournant autour d'un même axe (11), fixée au fuselage (1) par une liaison mobile, conçue de manière à transmettre à la tête de rotor de l'énergie issue des moyens de transmission d'énergie tout en assurant une liberté de mouvement angulaire de la tête de rotor,
   - aux moins deux vérins (4 et 5) de commande de l'orientation de ladite tête de rotor (2) par rapport au fuselage (1),
   - des moyens de commande desdits vérins,

   **caractérisé en ce que** la susdite liaison mobile est conçue de manière à permettre des variations angulaires de la tête par rapport au fuselage supérieures à 20° et pouvant atteindre ± 20°, de façon à pouvoir placer le plan des rotors à l'horizontale même si le fuselage est fortement incliné et **en ce que** les moyens de commande desdits vérins comprennent des moyens permettant d'orienter en tangage et en roulis la position de l'axe des rotors par rapport à la verticale indépendamment de l'attitude du fuselage, ces moyens d'orientation comprenant :

- un générateur d'angles (79) à commander à la tête de rotor (2) fournissant deux angles de tangage et roulis, respectivement $\beta$ et $\rho$,
- une référence de verticale (80) fournissant au moins deux angles représentant l'attitude du fuselage par rapport à la verticale, respectivement $\alpha$ et $\phi$,
- un élaborateur d'ordre (81) qui calcule les ordres à envoyer aux vérins pour que ceux-ci orientent la tête de rotor (2) de façon que son axe (11) fasse avec le fuselage (1) des angles $\gamma$ et $\sigma$ respectivement en tangage et roulis, $\gamma$ et $\sigma$ étant tels que

$$\gamma = \beta + \alpha \text{ et } \quad \sigma = \rho + \phi$$

de façon à ce que l'axe de la tête de rotor fasse bien avec la verticale les angles $\beta$ et $\rho$ respectivement en tangage et roulis.

2. Hélicoptère à pilotage pendulaire selon la revendication 1,
**caractérisé en ce qu'**il comporte au moins une dérive (6) et de préférence deux (6, 7) pivotant chacune autour d'un axe (76) incliné vers l'arrière d'un angle $\nu$ compris entre 35 et 55 degrés.

3. Hélicoptère à pilotage pendulaire selon la revendication 2,
**caractérisé en ce que** l'angle $\nu$ est sensiblement égal à 45 degrés.

4. Hélicoptère à pilotage pendulaire selon la revendication 1,
**caractérisé en ce qu'**il comporte des pieds de pales (31) ayant une articulation de battement constituée par une rondelle conique (56), de préférence élastique, maintenue en appui, de préférence au travers d'une autre rondelle (74), entre un lamage circulaire (67) solidaire d'un support de pale (53) et une pièce en forme de vis épaulée (54) ayant une tête (93), ladite pièce (54) étant solidaire d'une embase (52) fixée par une chape (57) à un plateau (19, 20) constituant le centre de l'un des deux rotors (77, 78), l'appui se faisant sous la tête de vis, de préférence au travers d'une rondelle d'appui (71), ladite pièce (54) ayant un épaulement (75) formant axe, et **en ce que** un matériau amortisseur (55), de forme cylindrique creuse, est placé autour dudit épaulement (75) et à l'intérieur d'un évidement (64) réalisé dans le support de pale (53).

5. Hélicoptère à pilotage pendulaire selon la revendication 1,
**caractérisé en ce que** la liaison mobile est constituée par une rotule (3) comportant une noix (35) articulée entre deux chapes, l'une (32) étant solidaire du fuselage et l'autre (33) étant solidaire d'une plaque support (13) sur laquelle est montée la tête de rotor (2), lesdites chapes et ladite noix étant creuses en leur centre.

6. Hélicoptère à pilotage pendulaire selon la revendication 5,
**caractérisé en ce que** les moyens de transmission comprennent un cardan (49) placé au centre de la noix (35) de la rotule (3) pour transmettre le mouvement à la tête de rotor (2).

7. Hélicoptère à pilotage pendulaire selon la revendication 1,
**caractérisé en ce que** la motorisation (9) comporte au moins un et de préférence deux moteurs à piston (37) à axe de sortie (39) verticaux et à cylindre (40) horizontaux et **en ce que** les cylindres (40) de ces moteurs sont placés à l'extérieur du fuselage (1) et sont refroidis directement par l'air extérieur.

8. Hélicoptère à pilotage pendulaire selon la revendication 1,
**caractérisé en ce que** les moyens de transmission comportent un réducteur (44) à un seul étage.

**Patentansprüche**

1. Hubschrauber mit waagerecht schwingender Steuerung mit:

- einem Rumpf (1) mit einem Motor (9) und Energieübertragungsmitteln,
- einem Rotorkopf (2) mit zwei gegenrotierenden Rotoren (77, 78), die sich um dieselbe Achse drehen (11) und am Rumpf (1) durch eine bewegliche Verbindung befestigt sind, um zum Rotorkopf die von den Energieübertragungsmitteln stammende Energie zu übertragen, wobei man eine winkelförmige Bewegungsfreiheit des Rotorkopfs sicherstellt,
- mindestens zwei Winden (4 und 5) zur Steuerung der Orientierung von besagtem Rotorkopf (2) im Verhältnis zu dem Rumpf (1),
- Steuerungsmittel für die genannten Winden,

**gekennzeichnet dadurch, dass** die besagte bewegliche Verbindung entworfen ist, um Veränderungen des Winkels des Kopfes im Verhältnis zu dem Rumpf über 20° zu gestatten, die $\pm$ 20° erreichen können, um die Ebene der Rotoren in der Waagrechten plazieren zu können, auch wenn der Rumpf stark geneigt ist, sowie dadurch, dass die Steuerungsmittel für die genannten Winden Mittel umfassen, wodurch es möglich wird, die Position der Achse der Rotoren im Verhältnis zur Senkrechten stampfend und rollend zu orientieren, unabhängig von der Haltung des Rumpfes, diese Orientierungsmittel umfassen:

- einen Winkelgenerator (79) für den Rotorkopf (2), der zwei Stampf- und Rollwinkel liefert, $\beta$ und $\rho$,
- eine Vertikalreferenz (80), die mindestens zwei Winkel liefert, die die Haltung des Rumpfes im Verhältnis zur Senkrechten darstellen, $\alpha$ und $\phi$,
- ein Befehlsrechner (81), der die an die Winden zu sendenden Befehle berechnet, damit diese den Rotorkopf (2) so orientieren, dass seine Achse (11) mit dem Rumpf (1) die Winkel $\gamma$ und $\sigma$ in Stampfen und Rollen bildet, wobei $\gamma$ und $\sigma$ sind:

$$\gamma = \beta + \alpha \text{ und } \sigma = \rho + \phi$$

damit die Achse des Rotorkopfs mit der Senkrechten die Winkel $\beta$ und $\rho$ in Stampfen und Rollen bildet.

2. Hubschrauber mit waagerecht schwingender Steuerung nach Anspruch 1, **gekennzeichnet dadurch, dass** er mindestens ein Seitenleitwerk (6) umfasst und vorzugsweise zwei (6, 7), die jedes um eine in einem Winkel $\nu$ zwischen 35 und 55 Grad nach hinten geneigte Achse (76) rotieren.

3. Hubschrauber mit waagerecht schwingender Steuerung nach Anspruch 2, **gekennzeichnet dadurch, dass** der Winkel $\nu$ gleich 45 Grad ist.

4. Hubschrauber mit waagerecht schwingender Steuerung nach Anspruch 1, **gekennzeichnet dadurch, dass** er Blattfüße (31) mit einem Schlaggelenk bestehend aus einer konischen Scheibe (56) umfasst, vorzugsweise elastisch und als Stütze gehalten, vorzugsweise durch eine andere Scheibe (74), zwischen einer runden Fräsung (67), die mit einem Blattträger (53) einstückig ist, und einem Stück in Form einer Bundschraube (54) mit einem Kopf (93), wobei das Stück (54) einstückig mit einer Halterung (52) ist, die mittels einer Haube (57) an einer Platte (19, 20) befestigt ist, die die Mitte eines der beiden Rotoren (77, 78) bildet, die Stütze erfolgt unter dem Schraubenkopf, vorzugsweise durch eine Stützscheibe (71), und das Stück (54) weist einem Ansatz (75) auf, der eine Achse bildet, sowie dadurch, dass ein stoßdämpfendes Material (55), in Hohlzylinderform, um den Ansatz (75) herum in einer Aushöhlung (64) in dem Blattträger (53) plaziert ist.

5. Hubschrauber mit waagerecht schwingender Steuerung nach Anspruch 1, **gekennzeichnet dadurch, dass** die bewegliche Verbindung aus einem Kugelgelenk (3) mit einer Muffe (35) besteht, das zwischen zwei Hauben angelenkt ist, deren eine (32) aus einem Stück mit dem Rumpf ist und die andere (33) einstückig mit einer Stützplatte (13), auf die der Rotorkopf (2) montiert ist, wobei die Hauben und die Muffe in ihrer Mitte hohl sind.

6. Hubschrauber mit waagerecht schwingender Steuerung nach Anspruch 5, **gekennzeichnet dadurch, dass** die Übertragungsmittel eine Kardanwelle (49) umfassen, die in der Mitte der Muffe (35) des Kugelgelenks (3) plaziert ist, um die Bewegung an den Rotorkopf (2) zu übertragen.

7. Hubschrauber mit waagerecht schwingender Steuerung nach Anspruch 1, **gekennzeichnet dadurch, dass** der Motor (9) mindestens einen und vorzugsweise zwei Kolbenmotoren (37) mit senkrechter Ausgangsachse (39) und mit waagrechtem Zylinder (40) umfasst und dadurch, dass die Zylinder (40) dieser Motoren außerhalb des Rumpfes (1) plaziert ist und direkt durch die Außenluft gekühlt werden.

8. Hubschrauber mit waagerecht schwingender Steuerung nach Anspruch 1, **gekennzeichnet dadurch, dass** die Übertragungsmittel einen Druckreduzierer (44) mit einer einzigen Stufe enthalten.

**Claims**

1. A helicopter with a pendular control of the type comprising:

   - a fuselage (1) provided with motorization (9) and energy transmission means,
   - a rotor head (2), comprising two counter-rotary rotors (77, 78) rotating around a same axis (11), attached to the fuselage (1) by a mobile link, designed in order to transmit energy from the energy transmission means to the rotor head while providing freedom of angular movement of the rotor head,
   - at least two actuators (4 and 5) for controlling the orientation of said rotor head (2) relatively to the fuselage (1),
   - means for controlling said actuators,

   **characterized in that** the aforesaid mobile link is designed so as to allow angular variations of the head larger than 20° and which may attain ± 20°, relatively to the fuselage, so as to be able to place the plane of the rotors in a horizontal position even if the fuselage is highly tilted and **in that** the means for controlling said actuators comprise means allowing the position of the axis of the rotors to be orientated in pitch and roll relatively to the vertical independently of the attitude of the fuselage, these orientation means comprising:

   - an angle generator (79) to be controlled at the rotor head (2) providing two pitch and roll angles, $\beta$ and $\rho$, respectively,
   - a vertical reference (80) providing at least two angles representing the attitude of the fuselage relatively to the vertical, $\alpha$ and $\phi$, respectively
   - an order computer (81) which computes the orders to be sent to the actuators so that the latter direct the rotor head (2) so that its axis (11) forms with the fuselage (1) angles $\gamma$ and $\sigma$ in pitch and roll, respectively, $\gamma$ and $\sigma$ being such that

$$\gamma = \beta + \alpha \text{ and } \sigma = \rho + \phi$$

   so that the axis of the rotor head actually forms with the vertical, angles $\beta$ and $\rho$, in pitch and roll, respectively.

2. The helicopter with a pendular control according to claim 1, **characterized in that** it comprises at least one drift (6) and preferably two drifts (6, 7) each pivoting around an axis (76) tilted towards the rear with an angle $\nu$ between 35 and 55 degrees.

3. The helicopter with a pendular control according to claim 2, **characterized in that** the angle $\nu$ is substantially equal to 45 degrees.

4. The helicopter with a pendular control according to claim 1, **characterized in that** it comprises blade shanks (31) with a flapping hinge formed by a preferably elastic conical washer (56), held supported, preferably through another washer (74), between a spot facing (67) permanently attached to a blade support (53) and a shouldered screw-shaped part (54) with a head (93), said part (54) being permanently attached to a base (52) attached by a clevis mounting (57) to a plate (19, 20) forming the center of one of the two rotors (77, 78), the supporting action occurring under the screw head, preferably through a supporting washer (71), said part (54) having a shoulder (75) forming an axis, and **in that** a damping material (55), with the shape of a hollow cylinder, is placed around said shoulder (75) and inside a recess (64) made in the blade support (53).

5. The helicopter with a pendular control according to claim 1, **characterized in that** the mobile link is formed with a ball-and-socket joint (3) comprising an articulated ball (35) between two clevis mountings, one (32) being permanently attached to the fuselage and the other (33) being permanently attached to a supporting plate (13) on which the rotor head is mounted (2), said clevis mountings and said ball being hollow in their centre.

6. The helicopter with a pendular control according to claim 5, **characterized in that** the transmission means comprise a cardan joint (49) placed in the centre of the ball (35) of the ball-and-socket joint (3) for transmitting the movement to the rotor head (2).

7. The helicopter with a pendular control according to claim 1, **characterized in that** the motorization (9) comprises at least one, and preferably two piston engines (37) with vertical output axes (39) and horizontal cylinders (40), and **in that** the cylinders (40) of these engines are placed outside the fuselage (1) and are directly cooled by the outside air.

8. The helicopter with a pendular control according to claim 1, **characterized in that** the transmission means comprise a single stage reducer (44).

**Figure 1**

**Figure 5a**

**Figure 5b**

Figure 2

EP 1 165 369 B1

Figure 3

**Figure 4**

**Figure 6**

**Figure 7**

$$\gamma = \beta + \alpha$$
$$\sigma = \rho + \phi$$

**Figure 8**

**Figure 9a**

**Figure 9b**

**Figure 10**

**Figure 11**